# EUROPEAN PATENT SPECIFICATION

(11) **EP 3 983 705 B1**
(45) Date of publication and mention of the grant of the patent: **15.03.2023**
(21) Application number: 20742921.8
(22) Date of filing: 08.06.2020
(51) Int. Cl.: F16K 5/20, F16K 11/087, F16K 25/00, E21B 34/00, F16J 15/06

(54) **SELECTOR AND SEALING ORGAN FOR MULTI SELECTOR VALVE**
AUSWAHL- UND DICHTUNGSORGAN FÜR MULTI-AUSWAHLVENTIL
ORGANE SÉLECTEUR ET D'ÉTANCHÉITÉ POUR VANNE MULTI-SÉLECTEUR

(30) Priority: 13.06.2019 IT 201900008811
(43) Date of publication of application: 20.04.2022
(73) Proprietor: Truflo Rona S.r.l., 20144 Milano (IT)
(72) Inventor: MESSENI, Manuele, 20144 Milano (IT); VAGO, Antonello, 20144 Milano (IT)
(74) Representative: Bruni, Giovanni
(86) International application number: PCT/IB2020/055363
(87) International publication number: WO 2020/250105

(56) References cited:
- EP-A1- 2 505 882
- CN-B- 105 179 749
- CN-U- 204 284 517
- CN-Y- 2 606 826
- KR-B1- 101 765 881
- US-A1- 2014 263 360
- US-A1- 2017 219 105

## Description

### Technical field of the invention

The present invention relates to a multi-selector valve for use in "Oil and Gas" field, which collects the flows coming from the well-lines and enables the analysis of the parameters of each single supply line, by selectively deflecting each flow to be analyzed. The flow isolation is obtained by means of an innovative selector and sealing organ.

### Background art

As known, in the production of oil, natural gas and other fluids, valves are necessary in any operation because of the need to direct the flow of fluids (gas, water and oil) between wells, pumps, tanks and refineries. In general, the development of oil and gas comprises drilling, production (supply of surface fluids), treatment of various oil and gas mixtures and transportation to oil refineries and gas outlets. Generally, the fluids coming from the wells are transported in a in central collection point, in order to further combine or separate them for subsequent processes such as refining, gas sale, etc. In addition, tests are often required for each flow to ensure the quality of the fluids produced. As a result, the production of each well is generally directed to a collection point which directs the products of the well to various test and/or production destination. In order to do so, in general pipes or system of pipes and multi-selector valves are used in order to direct the flows to the desired positions and to drive more inlets to a single destination.

Such technique is known and can be derived for example from document US2012216887 A1, in which a multi-selector valve is described comprising a flow fitting pivotally arranged in order that the flow can be aligned by rotation with each of the plurality of inlet openings. Another example of known multi-selector valves according to the preamble of claim 1 and applied in the "Oil and Gas" field is described in document CN105179749. Finally, document US2017/0219105A1 describes a multi-selector valve applied to internal combustion engines, therefore outside the scope of interest of the present invention.

In the known solutions, moreover, the fittings of the multi-selector valves are based on the technology that puts cylindrical surfaces in contact with each other, i.e. a first convex cylindrical surface (SEAT) is pre-loaded against a second concave cylindrical surface (BODY) between the selector element and each supply line. Generally the multi-selector valves are provided with a single soft convex cylindrical surface (SEAT) which is pre-loaded against the same internal surface of the concave body (BODY) of the different lines and in order to perform the coupling and sealing.

The known solutions have the drawbacks due to sealing losses between the selector element and one or more lines, as a result of the wear of the soft connecting surfaces that very often cause leaks also from other lines. This results in having to carry out plant stops or, generally every six months, to monitor the different supply lines.

Furthermore, the known art does not ensure a simultaneous and reliable sealing of all the supply lines, so as to allow the full operation of the system when the valve selectively prepares the deviation of the flow to be analyzed.

There is, therefore, the need to define an innovative selector and sealing organ for a multi-selector valve that is free from the drawbacks mentioned above.

### Summary of the invention

The present invention has the aim of solving the following technical problems by: improving the isolation of the supply line to be characterized and the sealing of the selector element by making it more reliable and long-lasting, in order to guarantee the full operation of the system when the valve presets a selective diversion of flow to be analyzed and by therefore increasing the performances of the multi-selector valve with respect to that referred to in the known art.

For such aim, according to the invention, the multi-selector valve has an innovative selector and sealing organ, i.e. a coupling between a conical surface (SEAT) and a spherical surface (BALL) between the selector element and each supply line, which has the characteristics set out in the independent product claim.

Further preferred and/or particularly advantageous embodiments of the invention are described according to the characteristics set out in the appended dependent claims.

### Brief description of the drawings

The invention will now be described with reference to the attached drawings, which illustrate some non-limiting examples of embodiments, in which:
- Figure 1 is an axonometric view of a set of multi-selector valve,
- Figure 2 is a schematic section of the inside of a multi-selector valve comprising a selector and a sealing element according to the present invention, wherein the selector element is in the rest position,
- Figure 3 is a schematic view of a longitudinal section of the multi-selector valve of Fig. 2,
- Figure 4 is a schematic section of the inside of a multi-selector valve comprising a selector and sealing element according to the present invention, wherein the selector element is in the interception and deviation position of the line to be calibrated,
- Figure 5 schematically shows a longitudinal section of the multi-selector valve of Fig. 4,
- Figure 6 is a cross section of the multi-selector valve of Fig. 1, in which the shape of the shutter and the sealing element is shown according to the present invention,
- Figure 7 is a detail of the sealing between the selector element and the supply line, according to the present invention,
- Figure 8 is a detail of the multi-selector valve of Fig. 1, wherein elastic means are visible, which ensure the sealing between the selector element and the supply line, according to the present invention,
- Figure 9 shows the multi-selector valve in which the elastic means of Fig. 8 are adapted to simultaneously ensure the sealing between selector elements and the supply lines, and
- Figure 10 is a detail of the sealing between the valve body, the selector element and a supply line.

### Detailed description

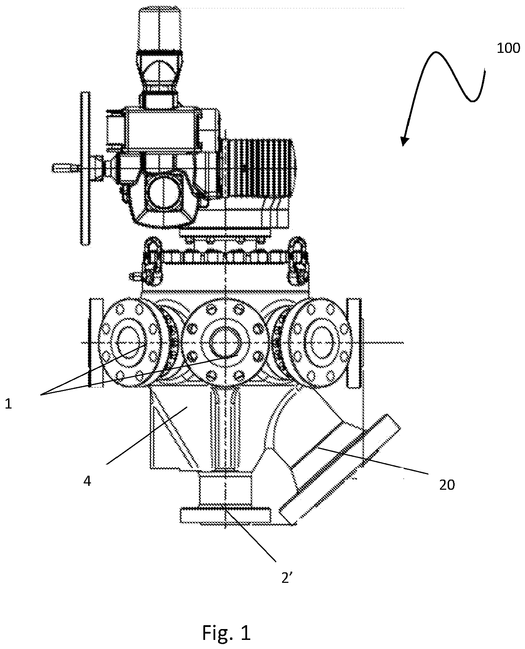

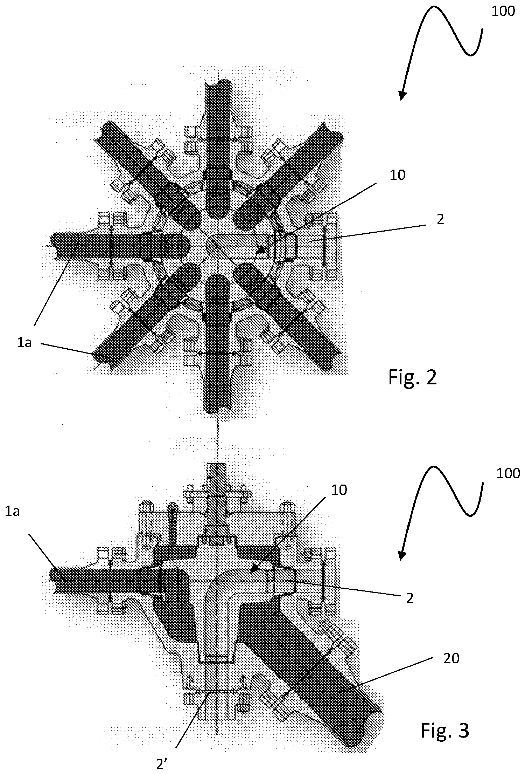

With reference to the aforesaid figures, Figure 1 is an axonometric overall view of a multi-selector valve 100. The multi-selector valve 100 comprises a valve body 4, a plurality of inlet fittings 1 in connection with the respective supply lines 1a, for example seven in number (shown in Figures 2-5), coming from a plurality of wells positioned between them at various distances, a delivery connector 20 and a delivery connector for carrying out tests 2'.

In the resting position, shown in Figure 2 and Figure 3, the selector element 10 isolates the discharge for the execution of tests 2', as the same is not in communication with any inlet fitting 1, but communicates with the so-called resting (inactive) position 2.

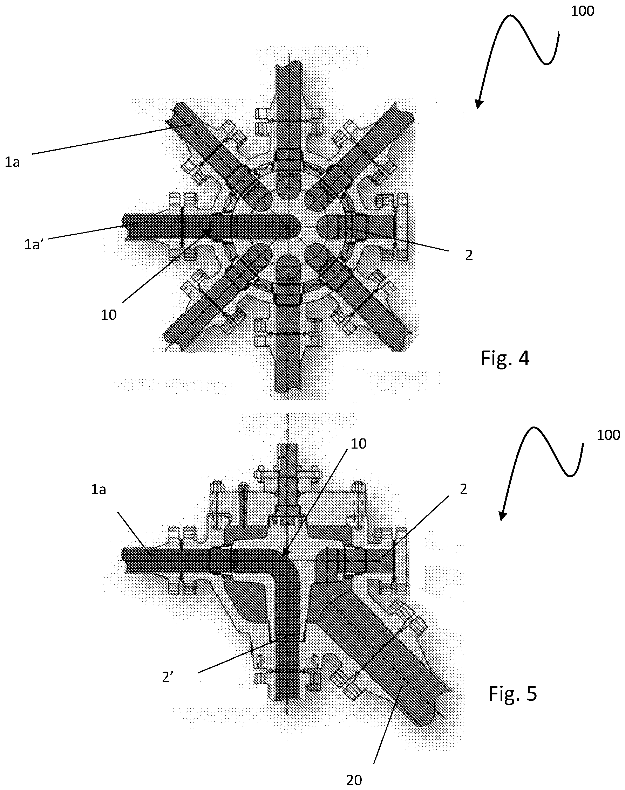

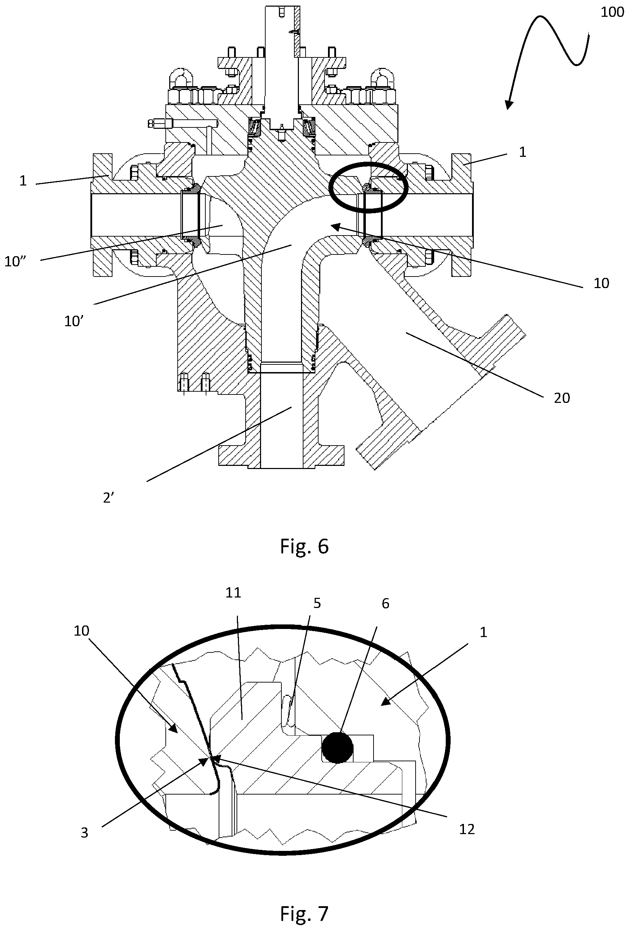

With reference to Figure 4 and Figure 5, the selector element 10 is shown during the working phase. In particular, for example, the selector element 10 isolates a fitting or inlet 1' of the plurality of inlet fittings 1, in connection with an operating supply line 1a', to carry out the test, putting it in communication with the delivery connector for the execution of tests 2'. Once the analysis has been completed, the selector element 10 is handled to test another supply line or to return to the resting position 2. With reference to Figure 6, the selector element 10 is visible in cross section and in particular a first connection 10' between an inlet fitting 1 of the intercepted supply line and the delivery connector for the execution of test 2'. A second connection 10" is also visible, with a generic supply line which has not been tested.

Advantageously, the geometry of the connections 10" is identical for all supply lines 1a.

More particularly, with reference to Figure 6 and 7, in a transverse cross-section the sealing area is shown between the selector element 10 and a generic inlet fitting 1.

The pressure sealing between the selector element 10 and an inlet connector 1 is realized through a sealing element or seat 11 which, being formed with a conical surface 3 coupled to a spherical surface 12 of the selector element 10, generates a conical-spherical coupling. This sealing is present on each of the eight inlet fittings 1 of the multi-selector valve 100.

Both the selector element 10 and the sealing seat 11 are coated on the surface by means of the addition of either metal carbides (tungsten or chromium) or with a surface hardening treatment (nitriding), which allows to generate the conical-spherical pressure sealing between fully metal elements (conical surface 3 of the sealing seat 11 and the spherical surface 12 of the selector element 10), by limiting wear and preventing seizing of the parts.

In particular, the conical surface 3 of the sealing seat 11 and the spherical surface 12 of the selector element 10 are surface hardened, for example by means of a tungsten carbide/chromium coating (HVOF) up to a thickness ranging between 150 and 400 µm and by reaching a hardness equal to or greater than 1000 HV.

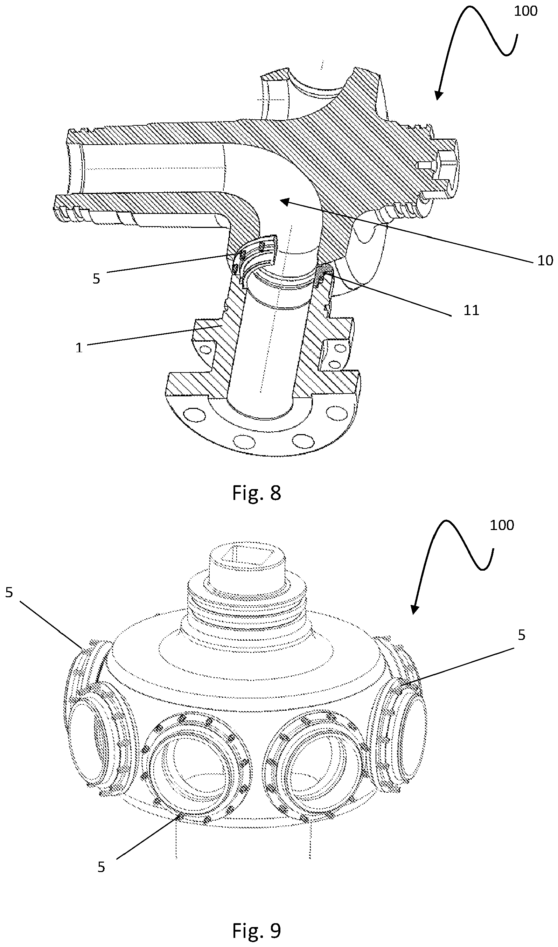

The stable contact between the conical surface 3 and the spherical surface 12 is ensured by a plurality of elastic means 5, also visible in Figure 8, which are preloaded between a surface of the inlet fitting 1 and a seat surface sealing 11, located on a band opposite to the conical surface 3 of the sealing seat 11. In this way the elastic means 5 ensure, in any operating situation, a sure and reliable contact of the conical surface 3 of the sealing seat 11 and the spherical surface 12 of the selector element 10.

It is to be observed, as shown in Figure 9, that the plurality of elastic means 5 is present on each inlet fitting 1 with the same preloading mode. In this way, it is possible to ensure a simultaneous and reliable sealing of all supply lines 1a, so as to allow the full operation of the system when the valve selectively prepares the deviation of the flow to be analyzed.

Furthermore, returning to Figure 7, an elastomeric or thermoplastic gasket 6 is interposed between the inlet fitting 1 and the sealing seat 11, so that the gasket sail ensures the sealing between the two components.

Advantageously, the conical-spherical sealing allows to create a complete spherical contact surface between the shutter and the seat and therefore it does not allow any leakage.

Advantageously, the sealing performances are the same as for the traditional ball valves, and it is therefore possible to achieve ISO 5208-Rate A.

Even more advantageously, the metal-metal sealing is obtained, in order to ensure long lasting performances with low maintenance. Both the conical surface and the spherical surface shutter are made of metal, and are coated by means of a thermal spray coating method - called High-Velocity Oxy-Fuel (HVOF) > 1000HV. The typical coatings of the sealing surfaces, for example, can be 316L SS, 22Cr Duplex SS, 25Cr Super-Duplex SS, Inconel^{®} 625 (E-NiCrMo3 or ER-NiCrMo3).

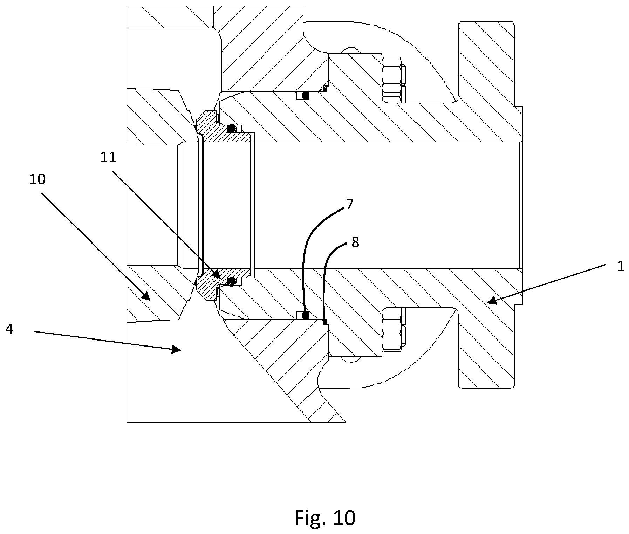

As shown in more detail in Figure 10, the sealing between the valve body 4 and an inlet fitting 1 comprises a first seal 7 and a second seal 8. The first seal 7 can be an elastomeric or thermoplastic sealing, depending on the operative conditions. The second seal 8 is an elastomeric gasket for containing the pressure in the event of damage to the first gasket 7, due for example to an exposure to fire. Advantageously, this combination of seals fully complies with the requirements of the fire specifications and it is then certified. This type of "redundant" sealing is applied to all joints between valve body 4 and inlet fittings 1.

In addition to the embodiments of the invention, as described above, it is to be understood that there are numerous further variants. It must also be understood that said embodiments are only examples and do not limit neither the object of the invention, nor its applications, nor its possible configurations. On the contrary, although the above description makes it possible for the skilled man to implement the present invention, at least according to an exemplary configuration, it must be understood that numerous variants of the described components are conceivable, without thereby abandoning the object of the invention, as defined in the attached claims.

## Claims

1. Multi-selector valve (100) comprising a valve body (4), a plurality of inlet fittings (1), configured to be in connection with respective supply lines (1a) coming from multiple wells and positioned between them at various distances, a first discharge connector (20) and a second discharge connector (2') for carrying out tests, wherein
- in said multi-selector valve (100), the sealing between a selector element (10) and each inlet fitting (1) is made by means of a conical-spherical sealing, and
- the conical-spherical sealing is made between a conical surface (3) of a sealing seat (11) and a spherical surface (12) of the selector element (10),
wherein the conical-spherical sealing between the conical surface (3) of sealing seat (11) and the spherical surface (12) of the selector element (10) is ensured by a plurality of elastic means (5), said multi-selector valve (100) being **characterized in that** each plurality of elastic means (5) is present on each inlet fitting (1), so as to ensure a simultaneous sealing of all supply lines (1a).

2. Multi-selector valve (100) according to claim 1, wherein each elastic means of the plurality of elastic means (5) is pre-charged between a surface of the inlet fitting (1) and a surface of the sealing seat (11), placed on a band opposite to the conical surface (3) of the sealing seat (11).

3. Valve (100) according to any of the preceding claims, wherein between the inlet fitting (1) and the sealing seat (11) an elastomeric gasket (6) is interposed, which ensures the sealing between the inlet fitting (1) and the sealing seat (11).

4. Valve (100) according to any of the preceding claims, wherein the conical surface (3) and the spherical surface (12) are surface-hardened by means of a coating made of Tungsten/Chromium Carbide (HVOF).

5. Valve (100) according to claim 4, wherein the coating made of Tungsten/Chromium Carbide has a thickness between 150 and 400 µm.

6. Valve (100) according to claim 4 or 5, wherein the conical surface (3) and the spherical surface (12) reach a hardness equal to or greater than 1000 HV.

7. Valve (100) according to any of the preceding claims, wherein the sealing between the valve body (4) and the inlet fitting (1) comprises a first seal (7) and a second seal (8) with a redundancy function.

8. Valve (100) according to claim 7, wherein the first seal (7) is an elastomeric or thermoplastic seal and the second seal (8) is an elastomeric seal, in order to contain the pressure in the event of damage of the first seal (7).

## Patentansprüche

1. Mehrfachwahlventil (100), umfassend einen Ventilkörper (4), eine Vielzahl von Einlassarmaturen (1), die in Verbindung mit jeweiligen Versorgungsleitungen (1a) konfiguriert sind, die von mehreren Schächten kommen und in unterschiedlichen Abständen zwischen ihnen positioniert sind, einen ersten Ablaufstutzen (20) und einen zweiten Ablaufstutzen (2') zur Durchführung von Tests, wobei
- bei dem Mehrfachwahlventil (100) wird die Abdichtung zwischen einem Auswahlelement (10) und jeder Einlassarmatur (1) mittels einer konisch-sphärischen Dichtung erreicht, und
- die konisch-sphärische Dichtung zwischen einer konischen Oberfläche (3) eines Dichtsitzes (11) und einer sphärischen Oberfläche (12) des Auswahlelements (10) hergestellt ist, wobei die konisch-sphärische Dichtung zwischen der konischen Oberfläche (3) des Dichtsitzes (11) und der sphärischen Oberfläche (12) des Auswahlelements (10) durch mehrere elastische Mittel (5) gewährleistet ist, wobei die Mehrfachwahlventil (100) ist **dadurch gekennzeichnet, dass** jede Vielzahl von elastischen Mitteln (5) an jedem Einlassarmatur (1) vorhanden ist, um eine gleichzeitige Abdichtung aller Versorgungsleitungen (1a) sicherzustellen.

2. Mehrfachwahlventil (100) nach Anspruch 1, wobei jedes elastische Mittel der mehreren elastischen Mittel (5) zwischen einer Oberfläche der Einlassarmatur (1) und einer Oberfläche des Dichtsitzes (11) vorgespannt und auf einem Band gegenüber der konischen Oberfläche (3) des Dichtsitzes (11) angeordnet ist.

3. Ventil (100) nach einem der vorhergehenden Ansprüche, wobei zwischen der Einlassarmatur (1) und dem Dichtsitz (11) eine Elastomerdichtung (6) zwischengeschaltet ist, die die Abdichtung zwischen der Einlassarmatur (1) und dem Dichtsitz (11) gewährleistet.

4. Ventil (100) nach einem der vorhergehenden Ansprüche, wobei die konische Oberfläche (3) und die sphärische Oberfläche (12) durch eine Abdeckung aus Wolfram/Chromcarbid (HVOF) oberflächengehärtet sind.

5. Ventil (100) nach Anspruch 4, wobei die Abdeckung aus Wolfram/Chromkarbid eine Dicke zwischen 150 und 400 Mikron aufweist.

6. Ventil (100) nach Anspruch 4 oder 5, wobei die konische Oberfläche (3) und die sphärische Oberfläche (12) eine Härte gleich oder größer als 1000 HV erreichen.

7. Ventil (100) nach einem der vorhergehenden Ansprüche, wobei die Dichtung zwischen dem Ventilkörper (4) und der Einlassarmatur (1) eine erste Dichtung (7) und eine zweite Dichtung (8) mit redundanter Funktion umfasst.

8. Ventil (100) nach Anspruch 7, wobei die erste Dichtung (7) eine Elastomer-oder thermoplastische Dichtung ist und die zweite Dichtung (8) eine Elastomerdichtung ist, um dem Druck im Falle einer Beschädigung der ersten Dichtung (7) zu standzuhalten.

## Revendications

1. Vanne multi-sélecteur (100) comprenant un corps de vanne (4), une pluralité de raccords d'entrée (1) configurés en connexion avec des conduits d'alimentation respectifs (1a) provenant de plusieurs puits et positionnés à différentes distances entre eux, un premier connecteur de vidange (20) et un deuxième connecteur de vidange (2') pour effectuer des tests, où
- dans ladite vanne multi-sélecteur (100), l'étanchéité entre un élément sélecteur (10) et chaque raccord d'entrée (1) est réalisée au moyen d'un joint conique-sphérique, et
- le joint conique-sphérique est réalisé entre une surface conique (3) d'un siège d'étanchéité (11) et une surface sphérique (12) de l'élément sélecteur (10),
où le joint conique-sphérique entre la surface conique (3) du siège d'étanchéité (11) et la surface sphérique (12) de l'élément sélecteur (10) est assuré par une pluralité de moyens élastiques (5), ladite vanne multi-sélecteur (100) étant **caractérisée en ce que** chaque pluralité de moyens élastiques (5) est présente sur chaque raccord d'entrée (1), de manière à assurer une étanchéité simultanée de tous les conduits d'alimentation (1a).

2. Vanne multi-sélecteur (100) selon la revendication 1, dans laquelle chaque moyen élastique de la pluralité de moyens élastiques (5) est précontraint entre une surface du raccord d'entrée (1) et une surface du siège d'étanchéité (11), disposé sur un ruban en face de la surface conique (3) du siège d'étanchéité (11).

3. Vanne (100) selon l'une des revendications précédentes, dans laquelle un joint en élastomère (6) est interposé entre le raccord d'entrée (1) et le siège d'étanchéité (11), qui assure l'étanchéité entre le raccord d'entrée (1) et le siège d'étanchéité (11).

4. Vanne (100) selon l'une des revendications précédentes, dans laquelle la surface conique (3) et la surface sphérique (12) sont durcies en surface par un couvercle en tungstène/carbure de chrome (HVOF).

5. Vanne (100) selon la revendication 4, dans laquelle le couvercle en carbure de tungstène/chrome a une épaisseur comprise entre 150 et 400 microns.

6. Vanne (100) selon la revendication 4 ou 5, dans laquelle la surface conique (3) et la surface sphérique (12) atteignent une dureté égale ou supérieure à 1000 HV.

7. Vanne (100) selon l'une des revendications précédentes, dans laquelle l'étanchéité entre le corps de vanne (4) et le raccord d'entrée (1) comprend un premier joint (7) et un deuxième joint (8) à fonction redondante.

8. Vanne (100) selon la revendication 7, dans laquelle le premier joint (7) est un joint en élastomère ou thermoplastique et le deuxième joint (8) est un joint en élastomère, afin de contenir la pression en cas d'un damage au premier joint (7).
